# EUROPEAN PATENT SPECIFICATION

(11) **EP 0 485 136 B1**
(45) Date of publication and mention of the grant of the patent: **27.03.1996**
(21) Application number: 91310163.0
(22) Date of filing: 04.11.1991
(51) Int. Cl.: B60C 9/26

(54) **Pneumatic tyre**
Luftreifen
Bandage pneumatique

(30) Priority: 06.11.1990 JP 301659/90
(43) Date of publication of application: 13.05.1992
(60) Divisional application: 94201413.5
(73) Proprietor: SUMITOMO RUBBER INDUSTRIES LIMITED, Kobe-shi Hyogo-ken (JP)
(72) Inventor: Iseki, Tsutomu, Nishi-shirakawa-gen, Fukushima-ken (JP); Sakamoto, Masayuki, Shirakawa-shi, Fukushima-ken (JP)
(74) Representative: Stewart, Charles Geoffrey

(56) References cited:
- FR-A- 2 361 230
- US-A- 2 982 327
- US-A- 3 563 296
- US-A- 3 770 042
- US-A- 3 830 276
- US-A- 4 002 789

## Description

The present invention relates to a pneumatic tyre and more particularly an improvement in a tread reinforcing belt.

In general, a radial pneumatic tyre is provided radially outside the carcass with a belt to reinforce the tread portion.

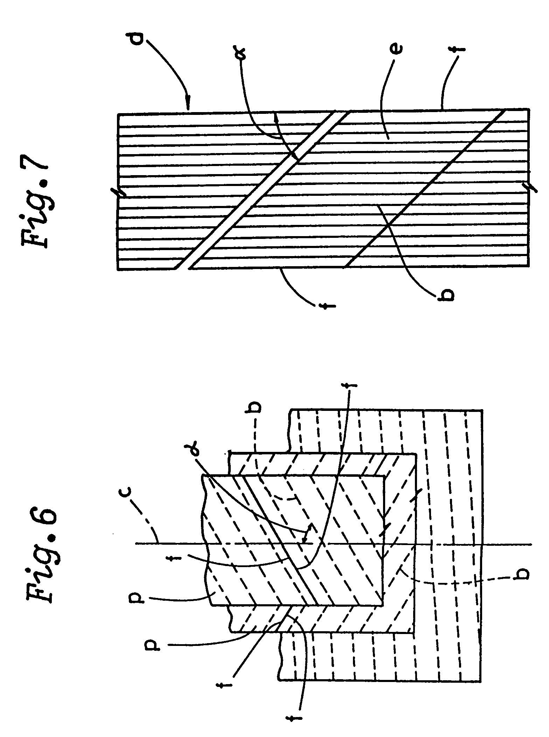

In a conventional belt structure, as shown in Figs.7 and 8, a belt ply (p) is formed by wrapping a strip (e) of rubberised parallel cords (b) around the carcass. The strip (e) of rubberised parallel cords (b) is made by cutting a sheet of tyre fabric (d) at a bias angle (α). The ends (f) of the strip (e) are joined by overlapping one end on the other with a small overlap, and a lap joint running at the bias angle (α) is thus formed. The belt also has two side edges around the tyre circumference which have cut ends for the cords forming the belt.

As a result of the bias joint, steering stability and directional stability during straight running are liable to be disturbed. This is particularly seen during high speed running. Further, durability is impaired due to the cord cut ends where rubber/cord separation failure arises leading to breaker edge looseness.

In order to solve those problems, a jointless belt formed by spirally winding a continuous cord around the carcass at a small angle to the tyre equator has been proposed in, for example, Japanese Utility-Model Publication No.58-160805. However, due to the spiral cord arrangement, drifting of the vehicle to one side is liable to occur as the tyre has a sideways bias.

A pneumatic tyre having a belt comprising a cord continuously wound around the tyre carcass while lying zigzag between the edges of the belt is known, for example from FR-A-2361230 or US-A-3830276. A tyre having a belt according to the preamble of claim 4 is known from US-A-2982327.

It is therefore, an object of the present invention to provide a method of manufacturing a tyre which can solve the problems of stability, durability and drifting and a tyre manufactured by the method.

According to one aspect of the present invention, a method of forming a belt for a pneumatic tyre, the belt comprising a ribbon of rubber in which a plurality of parallel cord are embedded extending in the longitudinal direction thereof wherein the ribbon is wound around the tyre zig-zag between a first belt edge and a second belt edge to define ribbon segments comprising cord segments including first cord segments and second cord segments, the first cord segments being laid substantially parallel to each other and the second cord segments being laid substantially parallel to each other and crosswise to the first cord segments, comprising folding back the ribbon at the first belt edge radially inwardly and folding back the ribbon at the second belt edge radially outwardly, characterised by winding the ribbon around the tyre a plurality of n times wherein in each winding the ribbon is wound from a starting point to the first belt edge at an angle α to the tyre circumferential direction, at the first belt edge the ribbon is folded back and wound to the second belt edge at an angle α to the tyre circumferential direction, at the second belt edge the ribbon is folded back and wound to the first belt edge at an angle α to the tyre circumferential direction, repeating the folding of the ribbon at the first belt edge and the second belt edge until the ribbon returns to a point adjacent to the starting point which point is the starting point of the next winding such that successive windings are adjacent and winding is continued until the gaps between the pitches of the first winding are filled.

According to another aspect of the invention a pneumatic tyre comprises a carcass extending between beads and a belt disposed radially outside the carcass and inside a tread, wherein the belt is manufactured according to said method.

Embodiments of the present invention will now be described in detail in conjunction with the accompanying drawings, in which:

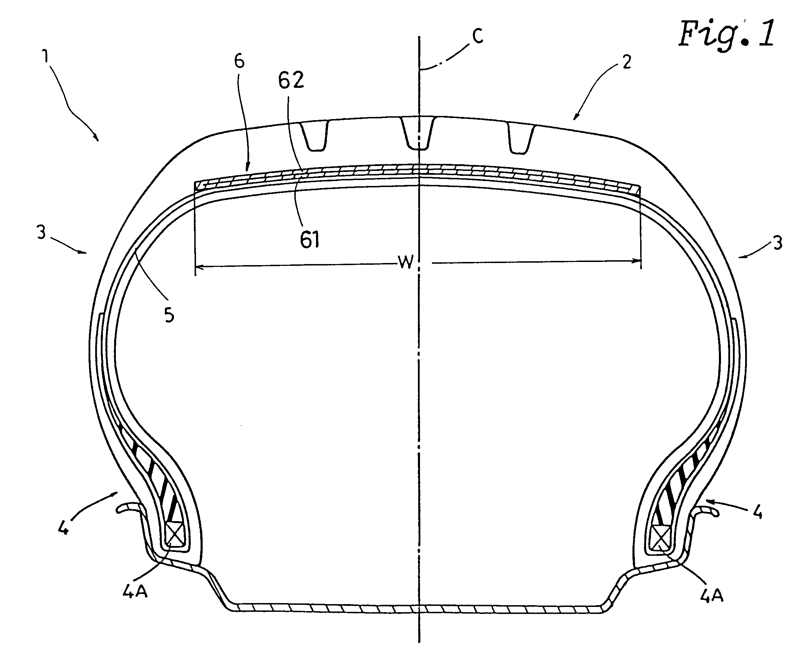

Fig.1 is a cross sectional view of a tyre according to the present invention;
Fig.2 is a developed plan view of a belt and a carcass;
Fig.3 is a perspective view of a ribbon of reinforced rubber used to form the belt;
Fig.4 is a developed plan view showing a method of making the belt;
Fig.5 is a developed plan view of another example of the belt;
Fig.6 is a developed plan view of a carcass and conventional belt structure; and
Fig.7 is a plan view of the tyre fabric used to form the conventional belt.

In the figures, a pneumatic tyre 1 has a tread 2, a pair of axially spaced bead portions 4, and a pair of sidewalls 3 extending between the tread edges and the bead portions 4. A bead core 4A is disposed in each bead portion 4 and a toroidal carcass 5 extends between the bead portions 4 and is turned up around the bead cores 4A. A jointless belt 6 is disposed radially outside the carcass 5 and inside the tread 2.

The carcass 5 in this embodiment comprises one ply of organic fibre cords, e.g. nylon, aromatic polyamide or the like, arranged radially at an angle of 60 to 90 degrees with respect to the tyre equator C so as to provide a radial or a so called semiradial ply construction.

The belt 6 comprises at least one continuous cord which is wound at least once around the carcass while running zigzag from one edge to the other edge of the belt, so that the or each belt cord has first parallel cord segments inclined at a bias angle (α) with respect to the tyre equator and second parallel cord segments inclined at the same bias angle (α) but in the opposite symmetrical direction with respect to the tyre equator.

Note that each cord segment is a substantially straight cord portion defined as extending from one edge to the other edge of the belt. By such an arrangement of the cord segments, the first cord segments cross the second cord segments.

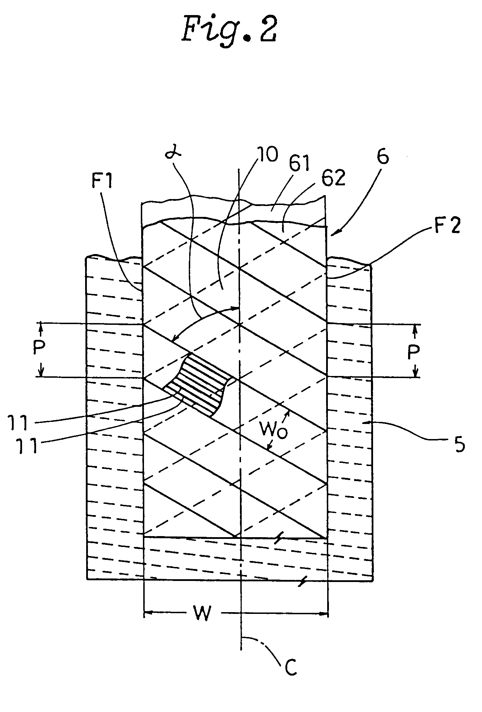

Fig.2 shows a first example of the belt 6, in which several parallel cords 11 in the form of a strip are wound together several times around the carcass. In this example, the first parallel cord segments 61 are located radially inside the second parallel cord segments 62.

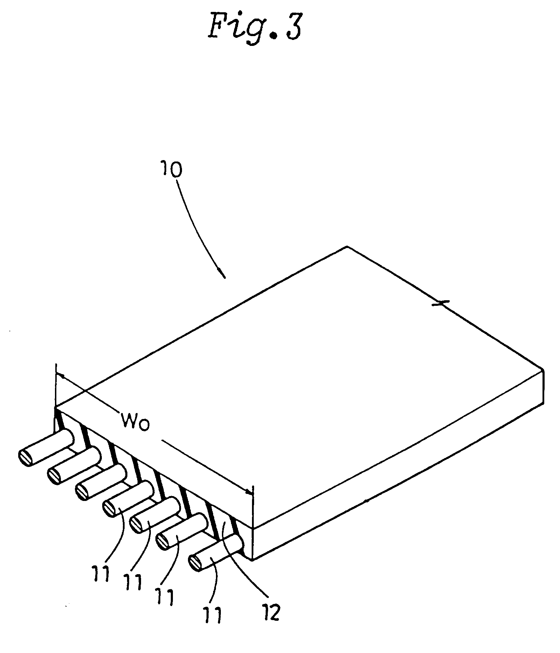

Fig.3 shows a strip or ribbon 10 of rubber. In order to make the belt, such a ribbon is used. In the ribbon, one belt cord or several parallel belt cords 11 is/are embedded in coating rubber 12.

The number of embedded cords 11 is in the range of 1 to 10. In the example shown in Fig.3, the number is 7, and the cross sectional shape of the ribbon 10 is a flat rectangle.

Preferably, the width Wo of the ribbon 10 is in the range of 5 to 15 mm.

For the belt cords 11, organic fibre cords, e.g. nylon, polyester, aromatic polyamide or the like or steel cords can be used. Preferably, aromatic polyamide fibre cords are used for their high modulus, which corresponds to that of steel cords, and their light weight.

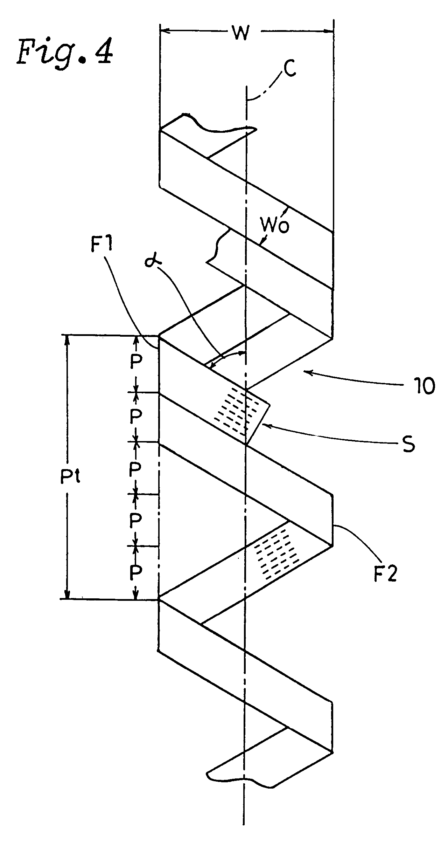

Fig.4 shows a method of making the belt 6 shown in Fig.2, wherein one ribbon 10 is wound around the tyre a plurality of times (n) as follows:-

In the fist winding, the ribbon extends at an angle (α) from a starting point S to the other (left side) belt edge F1;
A) at the other left side edge F1, the ribbon is folded back radially inwardly;
B) the next section of ribbon extends at angle (α) to the right side edge F2;
C) at the right side edge F2, the ribbon is folded back radially outwardly;
D) the next section of ribbon extends at angle (α) to the left side belt edge F1;
A) to D) are repeated until the ribbon returns to the starting point of the second winding which point is adjacent to the previous starting point S.

In the subsequent second winding around the tyre and third, fourth, --- and last (n)th windings, the ribbon is wound in the same way as the first winding.

By winding the ribbon (n)-times around the tyre, the belt becomes complete and closely packed. In other words, no spaces are left between the circumferentially adjacent ribbon segments (used in the same sense as the above-mentioned cord segments).

The zigzag pitch Pt in the circumferential direction of the tyre is (n) times the circumferential width P of the ribbon.

In the second to last windings, each of the starting points therefor is located before the previous starting point. That is, the circumferential length of one winding is smaller than that of the belt, and the difference therebetween is the circumferential width P of the ribbon ( $\text{P=Wo/sin (α)}$ ).

After the (n)-time winding of the ribbon, the terminal end thereof returns to the first starting point S and is joined to the starting end.

As described above, in this example, the ribbon is always folded back from a radially outward direction to a radially inward direction at the left side edge F1 and from radially inward to radially outward at the right side edge F2.

Accordingly, the ribbon is wound spirally and continuously around the central plane of the belt while being wound around the carcass generally.

Such a spiral-folding type belt is formed separately from the carcass, and thereafter they are assembled.

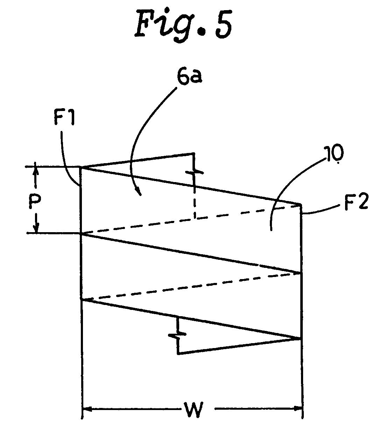

Fig 5 shows a modification of the above-explained belt 6. In this belt 6a, the zigzag pitch Pt is equal to the circumferential width P of the ribbon, and accordingly the bias angle of the belt cords becomes larger, and the ribbon is wound once around the carcass.

Further, in the belts in which the ribbon is wound a plurality of times around the carcass, for example the belt 6 and the belt 6 combined with the one-way folding, the circumferential length of one winding of the ribbon can be larger than that of the belt.

The difference therebetween is set to be the circumferential width P of the ribbon.

In other words, the starting points for the second to last windings are positioned behind and adjacent to the respective previous starting points.

The above-mentioned bias angle (α) of the ribbon 10 or belt cords 11 may be in the range of 10 to 80 degrees with respect to the tyre equator.

In the above-mentioned examples, the edges of the adjacent ribbon segments are not overlapped. However, they may be slightly overlapped.

Further, in the spiral folding explained in the first and second example belts 6 and 6a, after one belt layer is formed, a further layer can be formed successively by continuously winding the ribbon around the previously formed belt layer.

Furthermore, a belt layer made of a strip of conventional tyre fabric can be combined with the above-mentioned zigzag cord belts 6, 6a and 6b.

For example, a fabric belt layer may be disposed between the radially outer segments 62 and the radially inner segments 61 of the zigzag cord belt formed by spiral folding, or a fabric belt layer may be disposed radially outside or inside the zigzag cord belt.

As described above, in the pneumatic tyre according to the present invention, the belt is provided with an endless structure with respect to the circumferential direction of the tyre, and there is no cord cut end at the edges, and further, the first cord segments cross the second cord segments.

Therefore, belt edge looseness and rubber separation are effectively prevented, and durability of the tread portion is improved. The endless structure and cross structure provide a rigid and uniform reinforcement for the tread portion, and straight running performance and steering stability are improved.

## Claims

1. A method of forming a belt for a pneumatic tyre, the belt comprising a ribbon (10) of rubber in which a plurality of parallel cords (11) are embedded extending in the longitudinal direction thereof wherein the ribbon (10) is wound around the tyre zig-zag between a first belt edge (F1) and a second belt edge (F2) to define ribbon segments comprising cord segments including first cord segments (61) and second cord segments (62), the first cord segments (61) being laid substantially parallel to each other and the second cord segments (62) being laid substantially parallel to each other and crosswise to the first cord segments (61), comprising folding back the ribbon (10) at the first belt edge (F1) radially inwardly and folding back the ribbon (10) at the second belt edge (F2) radially outwardly, characterised by winding the ribbon around the tyre a plurality of n times wherein in each winding the ribbon is wound from a starting point (S) to the first belt edge (F1) at an angle α to the tyre circumferential direction (C), at the first belt edge (F1) the ribbon is folded back and wound to the second belt edge (F2) at an angle α to the tyre circumferential direction (C), at the second belt edge (F2) the ribbon is folded back and wound to the first belt edge (F1) at an angle α to the tyre circumferential direction, repeating the folding of the ribbon (10) at the first belt edge (F1) and the second belt edge (F2) until the ribbon (10) returns to a point adjacent to the starting point (S) which point is the starting point of the next winding such that successive windings are adjacent and winding is continued until the gaps between the pitches of the first winding are filled.

2. A method according to claim 1, characterised in that the circumferential length of one winding is smaller than that of the belt (6) such that the starting point of the second and subsequent windings is located before the starting point of the previous winding.

3. A method according to claim 1, characterised in that the circumferential length of one winding is larger than that of the belt (6) such that the starting point of the second and subsequent windings is located after the starting point of the previous winding.

4. A pneumatic tyre comprising a carcass (5) extending between beads (4) and a belt (6) disposed radially outside the carcass (5) and inside a tread (2), wherein the belt (6) is manufactured according to the method of claims 1 to 3.

## Patentansprüche

1. Ein Verfahren zum Bilden eines Gürtels für einen Luftreifen, wobei der Gürtel umfaßt ein Band (10) aus Gummi, in welchem eine Vielzahl von parallelen Corden (11) eingebettet ist, die sich in der longitudinalen Richtung davon erstrecken, wobei das Band (10) um den Reifen zickzackförmig zwischen einer ersten Gürtelkante (F1) und einer zweiten Gürtelkante (F2) gewickelt ist, um Bandsegmente zu definieren, die Cordsegmente umfassen, die erste Cordsegmente (61) und zweite Cordsegmente (62) einschließen, wobei die ersten Cordsegmente (61) im wesentlichen parallel zueinander gelegt sind und die zweiten Cordsegmente (62) im wesentlichen parallel zueinander und kreuzweise zu den ersten Cordsegmenten (61) gelegt sind, welches umfaßt, daß das Band (10) an der ersten Gürtelkante (F1) radial nach innen zurückgefaltet wird und das Band (10) an der zweiten Gürtelkante (F2) radial nach außen zurückgefaltet wird,
**gekennzeichnet durch** die Schritte, daß das Band um den Reifen eine Vielzahl von n Malen gewickelt wird, wobei in jeder Wicklung das Band von einem Startpunkt (S) zu der ersten Gürtelkante (F1) unter einem Winkel α zu der Reifenumfangsrichtung (C) gewickelt wird, an der ersten Gürtelkante (F1) das Band zurückgefaltet und zu der zweiten Gürtelkante (F2) unter einem Winkel α zu der Reifenumfangsrichtung (C) gewickelt wird, an der zweiten Gürtelkante (F2) das Band zurückgefaltet und zu der ersten Gürtelkante (F1) unter einem Winkel α zu der Reifenumfangsrichtung gewickelt wird, die Faltung des Bandes (10) an der ersten Gürtelkante (F1) und der zweiten Gürtelkante (F2) wiederholt wird, bis das Band (10) zu einem Punkt benachbart zu dem Startpunkt (S) zurückkehrt, welcher Punkt der Startpunkt der nächsten Wicklung ist, so daß sukzessive Wicklungen benachbart sind, und das Wickeln fortgesetzt wird, bis die Spalte zwischen den Steigungen der ersten Wicklung gefüllt sind.

2. Ein Verfahren nach Anspruch 1, dadurch gekennzeichnet, daß die Umfangslänge von einer Wicklung kleiner als jene des Gürtels (6) ist, so daß der Startpunkt der zweiten und nachfolgenden Wicklungen vor dem Startpunkt der vorhergehenden Wicklung angeordnet ist.

3. Ein Verfahren nach Anspruch 1, dadurch gekennzeichnet, daß die Umfangslänge von einer Wicklung größer als jene des Gürtels (6) ist, so daß der Startpunkt von den zweiten und nachfolgenden Wicklungen nach dem Startpunkt der vorhergehenden Wicklung angeordnet ist.

4. Ein Luftreifen mit einer Karkasse (5), die sich zwischen Wülsten (4) erstreckt, und einem Gürtel (6), der radial außerhalb der Karkasse (5) und innerhalb einer Lauffläche (2) angeordnet ist, wobei der Gürtel (6) nach dem Verfahren der Ansprüche 1 bis 3 hergestellt ist.

## Revendications

1. Procédé de formation d'une ceinture destinée à un pneumatique, la ceinture comprenant un ruban (10) de caoutchouc dans lequel plusieurs câblés parallèles (11) sont enrobés dans leur direction longitudinale, dans lequel le ruban (10) est enroulé autour du pneumatique suivant un trajet sinueux entre un premier bord (F1) de ceinture et un second bord (F2) de ceinture pour la délimitation de segments de ruban comprenant les segments de câblé comportant des premiers segments (61) et des seconds segments (62) de câblé, les premiers segments (61) de câblé étant sensiblement parallèles les uns aux autres et les seconds segments (62) de câblé étant sensiblement parallèles les uns aux autres et recoupant les premiers segments de câblé (61), le procédé comprenant le pliage du ruban (10) au premier bord de ceinture (F1) en direction radiale vers l'intérieur et le pliage du ruban (10) au second bord (F2) radialement vers l'extérieur, caractérisé par l'enroulement du ruban autour du pneumatique un nombre de fois égal à n, de manière que, à chaque enroulement, le ruban soit enroulé à partir d'un point initial (S) vers le premier bord de ceinture (F1) avec un angle α par rapport à la direction circonférentielle du pneumatique (C), au premier bord (F1), le ruban soit replié sur lui-même et enroulé vers le second bord (F2) de ceinture avec un angle α avec la direction circonférentielle du pneumatique (C), au second bord (F2), le ruban soit replié sur lui-même et enroulé vers le premier bord de ceinture (F1) avec un angle α par rapport à la direction circonférentielle du pneumatique, puis par la répétition du pliage du ruban (10) au premier bord de ceinture (F1) et au second bord de ceinture (F2), jusqu'à ce que le ruban (10) revienne à un point adjacent au point initial (S), ce point étant le point de départ de l'enroulement suivant afin que les enroulements successifs soient adjacents et que l'opération d'enroulement se poursuive jusqu'à ce que les espaces compris entre les pas du premier enroulement soient remplis.

2. Procédé selon la revendication 1, caractérisé en ce que la longueur circonférentielle d'un enroulement est inférieure à celle de la ceinture (6) si bien que le point initial du second enroulement et des enroulements suivants se trouve avant le point initial de l'enroulement précédent.

3. Procédé selon la revendication 1, caractérisé en ce que la longueur circonférentielle d'un enroulement est supérieure à celle de la ceinture (6), si bien que le point initial du second enroulement et des enroulements suivants se trouve après le point initial de l'enroulement précédent.

4. Pneumatique comprenant une carcasse (5) placée entre des talons (4) et une ceinture (6) disposée radialement à l'extérieur de la carcasse (5) et à l'intérieur d'une bande de roulement (2), dans lequel la ceinture (6) est confectionnée par mise en oeuvre du procédé selon les revendications 1 à 3.
